# EUROPÄISCHE PATENTSCHRIFT

(11) **EP 1 630 243 B1**
(45) Veröffentlichungstag und Bekanntmachung des Hinweises auf die Patenterteilung: **17.12.2014**
(21) Anmeldenummer: 05016193.4
(22) Anmeldetag: 26.07.2005
(51) Int. Cl.: C22F 1/00, F28F 19/02, F28F 21/08, H01M 8/02, H01M 8/12

(54) **Verfahren zum Herstellen eines Bauteils**
Method for manufacturing a workpiece
Procédé de fabrication d'un élément

(30) Priorität: 24.08.2004 DE 102004041097
(43) Veröffentlichungstag der Anmeldung: 01.03.2006
(73) Patentinhaber: Behr GmbH & Co. KG, 70469 Stuttgart (DE)
(72) Erfinder: Angermann, Hans-Heinrich, Dr., 70197 Stuttgart (DE)
(74) Vertreter: Grauel, Andreas

(56) Entgegenhaltungen:
- EP-A1- 0 714 147
- WO-A-99/25890
- DE-A1- 10 025 108
- QUADAKKERS W J ET AL: "Composition and growth mechanisms of alumina scales on FeCrAl-based alloys determined by SNMS" APPLIED SURFACE SCIENCE, ELSEVIER, AMSTERDAM, NL, Bd. 52, Nr. 4, 1. Dezember 1991 (1991-12-01), Seiten 271-287, XP024419151 ISSN: 0169-4332 [gefunden am 1991-12-01]

## Beschreibung

Die Erfindung betrifft ein Verfahren zum Herstellen eines Bauteils, insbesondere eines Bauteils einer Hochtemperatur-Brennstoffzelle mit ihrer Peripherie, wie einer Interkonnektorplatte oder eines Wärmeübertragers, aus einem Silizium haltigen oder aluminiumhaltigen Edelstahlmaterial, das eine chromoxidbildende Eisenlegierung umfasst.

Eine Hochtemperatur-Brennstoffzelle (Solid Oxide Fual Cell- SOFC), wie sie in der deutschen Offenlegungsschrift DE 100 25 108 A1 beschrieben ist, ermöglicht eine direkte Umwandlung von chemischer in elektrische Energie. Zur Stromerzeugung müssen mehrere Zellen zusammengeschaltet werden. Daher ist noch eine weitere Zellkomponente nötig, nämlich eine Interkonnektorplatte. Die Interkonnektorplatte bildet dabei nicht nur das Gas zuleitende Verbindungsglied zwischen den Einzelzellen, sondern auch die tragende Komponente der Zelle. In der bekannten Druckschrift wird vorgeschlagen, einen ferritischen Edelstahl für die Interkonnektorplatten zu verwenden, der mit erhöhten Gehalten an Mangan legiert ist. Die auf konventionellen Edelstählen vorliegende Chromoxidschicht bildet sich dann nicht mehr aus, sondern eine Spiriellphase (MnCr₂O₄). Dadurch kann das bei hohen Temperaturen auftretende Abdampfen von Chrom-Verbindungen verringert werden. Allerdings sind die Abdampfraten immer noch so hoch, dass im Langzeitbetrieb Leistungsverluste in der Brennstoffzelle auftreten können.

Aufgabe der Erfindung ist es, ein Verfahren zum Herstellen eines Bauteils, insbesondere eines Bauteils einer Hochtemperatur-Brennstoffzelle mit ihrer Peripherie, wie einer Interkonnektorplatte oder eines Wärmeübertragers, aus einem Silizium haltigen oder aluminiumhaltigen Edelstahlmaterial, das eine chromoxidbildende Eisenlegierung umfasst, und ein derartiges Bauteil zu schaffen, wobei die vorab beschriebene Chromabdampfung weiter reduziert werden kann.

Die Aufgabe ist bei einem Verfahren zum Herstellen eines Bauteils, insbesondere eines Bauteils einer Hochtemperatur-Brennstoffzelle und ihrer Peripherie, wie einer Interkonnektorplatte oder eines Wärmeübertragers oder eines Brenners, aus einem siliziumhaltigen oder aluminiumhaltigen Edelstahlmaterial, das eine chromoxidbildende Eisenlegierung umfasst, dadurch gelöst, dass das Bauteil in Luft bei hohen Temperaturen voroxidiert wird, bis sich an der Oberfläche des Bauteils eine Siliziumdioxidschicht (SiO₂) oder eine Aluminiumoxidschicht (Al₂O₃) und darüber eine Chromoxidschicht (Cr₂O₃) gebildet hat, die in einem weiteren Verfahrensschritt wieder entfernt wird. Der Fachmann weiß, dass sich über der Cr₂o₃-Schicht noch eine Fe-Oxid-Schicht bilden kann, die aber für das vorgestellte Verfahren nicht relevant ist. Weiterhin kann die Cr₂O₃-Schicht in Abhängigkeit von der chemischen Zusammensetzung des Grundwerkstoffs durch ein Mischoxid, zum Beispiel (Cr,Fe)₂O₃; ersetzt sein, was aber für das angegebene Verfahren keine Bedeutung hat. Die Siliziumdioxidschicht, die selbst naturgemäß keine Chrom-Verbindungen ausbildet, stellt eine Barriere für die Diffusion von Chrom aus dem Edelstahl-Grundmaterial an die Oberfläche dar. Ohne die Gegenwart von Chromoxid (Cr₂O₃) an der Oberfläche des Bauteils sind die Bildungsraten der unerwünschten und flüchtigen Chrom-Verbindungen sehr klein, da sie erst durch die Siliziumdioxidschicht oder die Aluminiumoxidschicht hindurch diffundieren müssen, bevor sich abdampfendes Chromoxid (Cr₂O₃) oder aus Cr-Atomen an der Oberfläche direkt flüchtiges Cr-Oxid bilden kann. Ein gemäß dem erfindungsgemäßen Verfahren hergestelltes Halbzeug ist zum Teil nicht mehr so gut bearbeitbar wie unbehandelte Halbzeuge. Dies gilt insbesondere für Fügeverfahren, wie Löten oder Schweißen. Deswegen ist das erfindungsgemäße Verfahren auf die Herstellung eines Bauteils gerichtet. Bei dem Bauteil kann es sich aber auch um ein beliebiges Werkstück oder Halbzeug handeln, wenn das Werkstück oder Halbzeug für die gewünschte Anwendung nicht weiter bearbeitet werden muss oder noch gut bearbeitbar ist. Das erfindungsgemäße Verfahren ist also auch auf die Herstellung eines Werkstücks oder eines Halbzeugs gerichtet.

Ein bevorzugtes Ausführungsbeispiel des Verfahrens ist dadurch gekennzeichnet, dass das Voroxidieren und das anschließende Entfernen der beim Voroxidieren gebildeten Chromoxidschicht durch eine Auslagerung des Bauteils in Luft bei hohen Temperaturen erfolgt. Die Auslagerung kann zum Beispiel in einem Glühofen im Luftstrom erfolgen.

Ein weiteres bevorzugtes Ausführungsbeispiel des Verfahrens ist dadurch gekennzeichnet, dass die Auslagerung in Luft bei einer Temperatur erfolgt, die größer als 650°C, insbesondere größer als 750°C, ist. Bei diesen Temperaturen wurden im Rahmen der vorliegenden Erfindung die besten Ergebnisse erzielt. Allgemein gilt, dass das Entfernen der Chromoxidschicht durch Auslagerung bei niedrigen Temperaturen langsamer abläuft als bei hohen Temperaturen.

Ein weiteres bevorzugtes Ausführungsbeispiel des Verfahrens ist dadurch gekennzeichnet, dass die Auslagerung in Luft bei einer Temperatur von etwa 900°C erfolgt.

Ein weiteres bevorzugtes Ausführungsbeispiel des Verfahrens ist dadurch gekennzeichnet, dass die Auslagerung in Luft mindestens 2 Stunden, insbesondere mindestens 24 Stunden, dauert. Die Auslagerungsdauer hängt insbesondere von der Auslagerungstemperatur ab. Je höher die Auslagerungstemperatur ist, desto kürzer kann die Auslagerungsdauer sein. Die Auslagerungstemperatur ist nach oben durch das Auftreten von anderen Effekten wie beispielsweise Versprödung durch Grobkombildung begrenzt.

Ein weiteres bevorzugtes Ausführungsbeispiel des Verfahrens ist dadurch gekennzeichnet, dass die Auslagerung in Luft bei 900°C etwa 90 Stunden dauert. Im Rahmen der vorliegenden Erfindung wurde festgestellt, dass bei einer längeren Auslagerung keine signifikante Verbesserung mehr erzielt wird, das heißt, dass die anfänglich gebildete Cr₂O₃-Schicht dann abgebaut ist.

Ein weiteres bevorzugtes Ausführungsbeispiel des Verfahrens ist dadurch gekennzeichnet, dass die beim Voroxidieren gebildete Chromoxidschicht mit Hilfe einer Beizflüssigkeit durch Beizen entfernt wird. Der Vorteil dieser Ausführungsform ist, dass das Voroxidieren mit anschließender Beizentfemung der Cr₂O₃-Schicht relativ wenig Zeit benötigt. Die Voroxidation muss nur solange erfolgen, bis sich eine durchgehende SiO₂- oder Al₂O₃-Schicht gebildet hat. Dies kann in Abhängigkeit von der gewünschten Temperatur schon noch wenigen Stunden der Fall sein. Beim Beizen macht man sich zunutze, dass Siliziumdioxid und Aluminiumoxid in Säuren und Laugen tendenziell unlöslich sind (bei Al₂O₃ muss man zwischen den α-Al₂O₃ und den γ-Al₂O₃ differenzieren;. α-Al₂O₃ ist unlöslich, γ-Al₂O₃ wird von starken Basen und Säuren jedoch angegriffen; es ist also sinnvoll, durch die Voroxidation α-Al₂O₃ zu erzeugen), die Chromoxidschicht jedoch von der Beizflüssigkeit angegriffen wird. Als Beizflüssigkeit können zum Beispiel anorganische Säuren beziehungsweise Säuregemische oder wässrige Alkalienlösungen verwendet werden.

Ein weiteres bevorzugtes Ausführungsbeispiel des Verfahrens ist dadurch gelöst, dass das Bauteil in ein Bad mit Beizflüssigkeit eingelegt wird. Dabei ist darauf zu achten, dass möglichst die gesamte Oberfläche der zu entfernenden Chromschicht für die Beizflüssigkeit zugänglich ist.

Ein weiteres bevorzugtes Ausführungsbeispiel des Verfahrens ist dadurch gekennzeichnet, dass die Beizflüssigkeit durch das Bauteil hindurch gepumpt wird. Dadurch kann das Entfernen der Chromoxidschicht beschleunigt werden. Nach dem Beizen muss das Bauteil im Allgemeinen durch Spülen von Resten der Beizflüssigkeit befreit werden.

Bei einem Bauteil, insbesondere einem Bauteil einer Hochtemperatur-Brennstoffzelle, wie einer Interkonnektorplatte oder einem Wärmeübertrager, aus einem siliziumhaltigen oder aluminiumhaltigen Edelstahlmaterial, das eine chromoxidbildende Eisenlegierung umfasst, ist die oben angegebene Aufgabe dadurch gelöst, dass das Bauteil an der Oberfläche im Wesentlichen eine Siliziumdioxidschicht (SiO₂) oder eine Aluminiumdioxidschicht (Al₂O₃) aufweist, die insbesondere gemäß einem vorab beschriebenen Verfahren erzeugt worden ist.

Bei der Verwendung des Bauteils als Interkonnektorplatte ist zu beachten, dass diese eine hohe elektrische Leitfähigkeit aufweisen muss, was durch die Ausbildung einer reinen SiO₂- oder Al₂O₃-Schicht behindert wird. Es können dann dem Edelstahlgrundwerkstoff Elemente beigefügt sein, die zu einer chemischen und/oder kristallographisch sich veränderten Barriereschicht mit höherer elektrischer Leitfähigkeit führen.

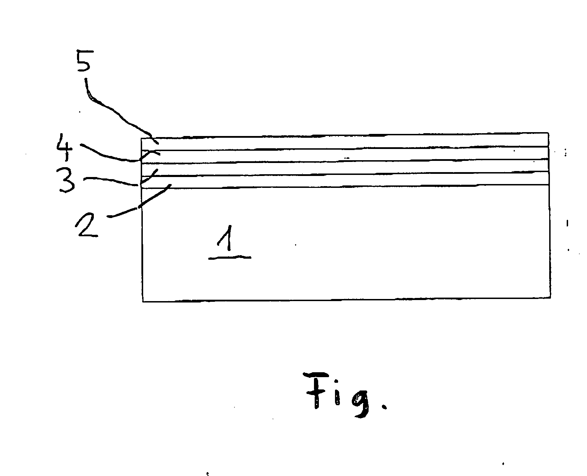

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.

In der beiliegenden Figur ist ein Ausschnitt eines mit mehreren Schichten versehenen Bauteils im Schnitt dargestellt. Das Bauteil ist aus einem Silizium- oder aluminiumhaltigen Grundwerkstoff 1 gebildet. Bei dem Grundwerkstoff 1 handelt es sich um einen Hochtemperaturwerkstoff, der eine chromoxidbildende Eisenlegierung umfasst. Auf der Oberfläche des Grundwerkstoffs 1 sind von innen nach außen vier Schichten 2, 3, 4 und 5 ausgebildet. Die Schicht 2 enthält Siliziumdioxid (SiO₂). Die Schicht 3 enthält Chromoxid (Cr₂O₃). Die Schicht 4 enthält Mangan- und/oder Chromoxid. Die Schicht 5 enthält Eisenoxid.

Es ist auch möglich, Edelstähle mit einer Perowskit-Schutzschicht zu überziehen. Diese Schutzschicht reduziert die Chrom-Abdampfraten um einen Faktor größer 100. Allerdings ist nachteilig, dass die Auftragung von Perowskit-Schutzschichten relativ aufwändig ist und die aufgetragenen Schutzschichten relativ leicht aufplatzen. Das Risiko des Abplatzens ist insbesondere dann hoch, wenn austenitische Edelstähle verwendet werden, da die thermischen Ausdehnungskoeffizienten von Austeniten und der Perowskit-Schutzschicht recht verschieden sind.

Außerdem ist die Verwendung von Nickel-Basislegierungen möglich, die aber wesentlich teuerer als Edelstähle sind. Des Weiteren passt der hohe thermische Ausdehnungskoeffizient der Nickel-Basislegierungen nicht zu dem niedrigen Ausdehnungskoeffizienten des Elektroden/Elektrolyt/Elektroden-Systems der Brennstoffzelle.

Durch die vorliegende Erfindung wird ein Bauteil beziehungsweise ein Material für ein Bauteil beziehungsweise ein Verfahren zur Herstellung des Bauteils geschaffen, durch welches die Chrom-Abdampfraten von Edelstählen reduziert werden können. Gemäß dem erfindungsgemäßen Verfahren wird ein Silizium- oder aluminiumhaltiger Edelstahl in Luft bei hohen Temperaturen voroxidiert, bis sich an der Oberfläche eine Chromoxidschicht (Cr₂O₃) und darunter eine Siliziumdioxid- (SiO₂) oder eine Aluminiumoxidschicht (Al₂O₃) gebildet hat. Die Chromoxidschicht wird dann vor dem Einsatz des Materials von der Oberfläche entfernt.

Im Rahmen der vorliegenden Erfindung wurde festgestellt, dass sich in den Anfangsstadien einer Auslagerung des Bauteils in Luft bei hohen Temperaturen eine besonders hohe Menge an flüchtigen Chrom-Verbindungen bildet. Gemäß der vorliegenden Erfindung wird diese anfänglich erhöhte Bildung von Chrom-Verbindungen unterbunden.

Silizium- oder aluminiumhaltige Edelstähle, die zusätzlich Chrom enthalten, bilden einerseits bei Oxidation in Luft auf ihrer unmittelbaren Oberfläche zunächst eine nicht-schützende Eisenoxidschicht 5 aus. Die Eisenoxidschicht 5 ist relativ durchlässig für Sauerstoffmoleküle. Darunter formiert sich eine schützende Schicht aus Chromoxid (Cr₂O₃). Bei manganhaltigen Stählen, zum Beispiel mit Mangangehalten von 0,5 Gew.-%, bildet sich auf der Chromoxidschicht 3 noch eine Chrom-Mangan-Oxidschicht 4 aus. An der Grenzfläche zwischen dem metallischen Grundwerkstoff 1 und dem Oxid bildet sich zusätzlich, in Abhängigkeit vom Silizium- beziehungsweise Aluminiumgehalt der Legierung, eine mehr oder weniger dicke Schicht 2 aus schützendem Siliziumdioxid (SiO₂) oder Aluminiumoxid (Al₂O₃) aus. Die Schichtdikken der Schichten 2 bis 5 sind in der beiliegenden Figur nicht maßstäblich dargestellt. Da die Schichten 4 und 5 im Rahmen der vorliegenden Erfindung keine Bedeutung haben beziehungsweise mit der Schicht 3 zusammen entfernt werden, wird auf die Schichten 4 und 5 nicht näher eingegangen.

Die flüchtigen Chrom-Verbindungen bilden sich gemäß den folgenden Reaktionen:

Cr₂O₃(s) + 1,5 O₂(g) = 2 CrO₃(g) (1)

Cr₂O₃(s) + 1,5 O₂(g) + 2 H₂O(g) = 2 CrO₂(OH)₂(g) (2)

Cr₂O₃(s) + O₂(g) + H₂O(g) = 2 CrO₂(OH)(g) (3)

Es formieren sich also durch Oxidation des festen Chromoxids auf der Werkstoffoberfläche volatile Chrom-Oxide und Chrom-Oxihydroxide. Ohne die Gegenwart von Cr₂O₃ auf der Werkstoffoberfläche sind die Bildungsraten der flüchtigen Chrom-Verbindungen auf den Silizium- und chromhaltigen Edelstählen sehr klein, da Chrom zunächst durch die sehr dichte Siliziumdioxid-oder Aluminiumoxidschicht hindurch diffundieren muss, bevor sich abdampfendes Chromoxid (Cr₂O₃) bilden kann. SiO₂ und Al₂O₃ fungieren als Diffusionssperre und bilden selbst naturgemäß keine Chrom-Verbindungen aus. Wenn man das Material vor seinem eigentlichen Einsatz in Luft voroxidiert und die anfänglich entstandene Cr₂O₃-Schicht entfernt, dann hat man zumindest einen Teil der Bildung von flüchtigen Chrom-Verbindungen innerhalb der geplanten Anwendung, zum Beispiel als Wärmetauscher zur Anwärmung der Kathodenluft für eine SOFC-Brennstoffzelle, vermieden.

Wesentlicher Bestandteil der vorliegenden Erfindung ist es, die anfänglich gebildete Cr₂O₃-Schicht durch eine weitere Auslagerung für entsprechend lange Zeit in Luft bei hohen Temperaturen zu entfemen. Zum Beispiel werden bei einer Auslagerung in Luft bei 900°C für eine offen der Luft ausgesetzte Materialprobe circa 90 Stunden benötigt. Durch die Auslagerung wird die Cr₂O₃-Schicht in flüchtige Chrom-Verbindungen umgewandelt. Diese Auslagerung kann beispielsweise in einem Glühofen im Luftstrom erfolgen. Vorzugsweise wird die aus dem Material gebildete Komponente ausgelagert, da man Edelstahlmaterial, auf dessen Oberfläche sich eine Siliziumdioxid-oder Aluminiumoxidschicht ausgebildet hat, nur noch schwer, zum Beispiel durch Löten mit Nickel-Basis-Lot zu einer Komponente, zum Beispiel einem Wärmeübertrager, fügen kann.

Ein weiterer wesentlicher Bestandteil der vorliegenden Erfindung ist es, die anfänglich gebildete Cr₂O₃-Schicht durch Beizen zu entfernen. Hier macht man sich zunutze, dass SiO₂ und Al₂O₃ im Wesentlichen in Säure und Lauge unlöslich sind, Cr₂O₃ jedoch angegriffen wird. Das Material oder vorzugsweise die aus dem Material gebildete Komponente wird in ein entsprechendes Bad eingelegt. Vorzugsweise wird die Beizflüssigkeit durch die Komponente hindurch gepumpt.

Das Problem der Leistungseinbuße der SOFC-Brennstoffzelle durch abgedampfte Chrom-Verbindungen aus den Interkonnektorplatten oder kathodenseitig vorgeschalteten Elementen kann durch die vorliegende Erfindung zumindest gemildert werden.

## Patentansprüche

1. Verfahren zum Herstellen eines Bauteils, aus einem siliziumhaltigen oder aluminiumhaltigen Edelstahlmaterial, das eine chromoxidbildende Eisenlegierung umfasst, **dadurch gekennzeichnet, dass** das Bauteil in Luft bei hohen Temperaturen voroxidiert wird, bis sich an der Oberfläche des Bauteils im Wesentlichen eine Siliziumoxidschicht (2) oder eine Aluminiumoxidschicht, und darüber eine Chromoxidschicht (3) gebildet hat, die in einem weiteren Verfahrensschritt wieder entfernbar ist.

2. Verfahren nach Anspruch 1, **dadurch gekennzeichnet, dass** das Voroxidieren und/oder das Entfernen der beim Voroxidieren gebildeten Chromoxidschicht (3) durch eine Auslagerung des Bauteils in Luft bei hohen Temperaturen erfolgen/erfolgt.

3. Verfahren nach Anspruch 2, **dadurch gekennzeichnet, dass** die Auslagerung in Luft bei einer Temperatur erfolgt, die größer als 650°C ist.

4. Verfahren nach Anspruch 3, **dadurch gekennzeichnet, dass** die Auslagerung in Luft bei einer Temperatur von etwa 900°C erfolgt.

5. Verfahren nach einem der Ansprüche 2 bis 4, **dadurch gekennzeichnet, dass** die Auslagerung in Luft mindestens 2 Stunden dauert.

6. Verfahren nach Anspruch 5, **dadurch gekennzeichnet, dass** die Auslagerung in Luft etwa 90 Stunden dauert.

7. Verfahren nach einem der vorhergehenden Ansprüche, **dadurch gekennzeichnet, dass** die beim Voroxidieren gebildete Chromoxidschicht (3) mit Hilfe einer Beizflüssigkeit durch Beizen entfernt wird.

8. Verfahren nach Anspruch 7, **dadurch gekennzeichnet, dass** das Bauteil in ein Bad mit Beizflüssigkeit eingelegt wird.

9. Verfahren nach Anspruch 7 oder 8, **dadurch gekennzeichnet, dass** die Beizflüssigkeit durch das Bauteil hindurch gepumpt wird.

## Claims

1. A method for producing a component made of a silicon-containing or aluminum-containing stainless steel material, which comprises a chromium oxide-forming iron alloy, **characterized in that** the component is pre-oxidized in air at high temperatures until, substantially, a silicon oxide layer (2) or an aluminum oxide layer and, on top thereof, a chromium oxide layer (3) has formed on the surface of the component, wherein said chromium oxide layer can be removed in a further method step.

2. The method according to claim 1, **characterized in that** the preoxidation and/or the removal of the chromium oxide layer (3) formed in the preoxidation takes place by conditioning the component in air at high temperatures.

3. The method according to claim 2, **characterized in that** the conditioning in air takes place at a temperature that is higher than 650°C.

4. The method according to claim 3, **characterized in that** the conditioning in air takes place at a temperature of approximately 900°C.

5. The method according to any one of the claims 2 to 4, **characterized in that** the conditioning in air lasts at least 2 hours.

6. The method according to claim 5, **characterized in that** the conditioning in air lasts approximately 90 hours.

7. The method according to any one of the preceding claims, **characterized in that** the chromium oxide layer (3) formed by preoxidation is removed by etching, by means of an etching fluid.

8. The method according to claim 7, **characterized in that** the component is placed into a bath with etching fluid.

9. The method according to claim 7 or 8, **characterized in that** the etching fluid is pumped through the component.

## Revendications

1. Procédé de fabrication d'un composant, à partir r d'un matériau en acier spécial contentant du silicium ou contenant de l'aluminium, matériau en acier spécial qui comprend un alliage de fer formant un oxyde de chrome,
**caractérisé en ce que** le composant est préoxydé à l'air, à des températures élevées, jusqu'à ce que se soit formée, sur la surface du composant, essentiellement une couche dioxyde de silicium (2) ou une couche d'oxyde d'aluminium et, par-dessus, une couche d'oxyde de chrome (3) qui peut à nouveau être éliminée dans une autre étape du procédé.

2. Procédé selon la revendication 1, **caractérisé en ce que** la préoxydation et / ou l'élimination de la couche d'oxyde de chrome (3) formée au cours de la préoxydation se produisent / se produit sous l'effet d'une exposition du composant à l'air, à des températures élevées.

3. Procédé selon la revendication 2, **caractérisé en ce que** l'exposition à l'air se produit à une température qui est supérieure à 650°C.

4. Procédé selon la revendication 3, **caractérisé en ce que** l'exposition à l'air se produit à une température à peu près égale à 900°C.

5. Procédé selon l'une quelconque des revendications 2 à 4, **caractérisé en ce que** l'exposition à l'air dure au moins 2 heures.

6. Procédé selon la revendication 5, **caractérisé en ce que** l'exposition à l'air dure à peu près 90 heures.

7. Procédé selon l'une quelconque des revendications précédentes, **caractérisé en ce que** la couche d'oxyde de chrome (3) formée au cours de la préoxydation est éliminée par décapage, à l'aide d'un liquide décapant.

8. Procédé selon la revendication 7, **caractérisé en ce que** le composant est immergé dans un bain contenant un liquide décapant.

9. Procédé selon la revendication 7 ou 8, **caractérisé en ce que** le liquide décapant est pompé à travers tout le composant.
